# EUROPEAN PATENT SPECIFICATION

(11) **EP 0 978 126 B1**
(45) Date of publication and mention of the grant of the patent: **07.04.2004**
(21) Application number: 98917929.6
(22) Date of filing: 21.04.1998
(51) Int. Cl.: G21C 1/00, G21C 21/00, E04G 11/22, G21C 13/00

(54) **A NUCLEAR REACTOR DEVICE AND A METHOD TO CONSTRUCT A NUCLEAR REACTOR DEVICE**
KERNREAKTORVORRICHTUNG UND VERFAHREN ZU IHRER HERSTELLUNG
DISPOSITIF DE REACTEUR NUCLEAIRE ET SON PROCEDE DE FABRICATION

(30) Priority: 21.04.1997 SE 9701487
(43) Date of publication of application: 09.02.2000
(73) Proprietor: Westinghouse Atom AB, 721 63 Västeras (SE)
(72) Inventor: CALLIN, Jan-Eric, S-722 31 Västeras (SE); CARLSSON, Claes, S-724 79 Västeras (SE); IVUNG, Bengt, S-724 76 Västeras (SE); KUKKOLA, Timo, FIN-26100 Rauma (FI)
(74) Representative: Berglund, Stefan
(86) International application number: PCT/SE1998/000721
(87) International publication number: WO 1998/048428

(56) References cited:
- CH-A- 472 558
- GB-A- 864 377
- GB-A- 1 218 248
- JP-A- 5 107 381
- US-A- 5 201 161
- PATENT ABSTRACTS OF JAPAN; & JP,A,05 107 381 (CENTRAL RES INST OF ELECTRIC POWER IND) 27 April 1993.
- "Handboken Bygg, M", 1985, LIBER FORLAG, STOCKHOLM, pages 89-96.
- "Handboken Bygg, V", 1985, LIBER FORLAG, STOCKHOLM, page 681.

## Description

### THE BACKGROUND OF THE INVENTION AND PRIOR ART

The present invention refers to a nuclear reactor device comprising a reactor containment, formed by a first wall member and enclosing an inner space, a reactor vessel housing a reactor core and being provided in the inner space, and an upper space provided above the reactor containment and defined by a second wall member. Such a nuclear reactor device is disclosed in US-A-5 201 161. The invention also refers to a method of constructing a nuclear reactor device, comprising the steps of casting a first wall member defining an inner space of a reactor containment intended to comprise a reactor vessel to be provided in the inner space and house a reactor core, and providing a second wall member defining an upper space above the reactor containment.

The fuel in the reactor core in such nuclear reactor devices needs to be regularly replaced by new fuel or to be displaced in the core. In order to perform this work, the reactor vessel is open and internal parts are removed therefrom, whereafter the fuel may be lifted out of the reactor vessel. The fuel as well as the internal parts are highly radioactive so that all handling has to be performed under water functioning as a radiation shield and also as cooling medium. In order to enable short fuel replacement period, the fuel and the internal parts are temporarily stored in water-filled pools provided in an upper space located above the reactor containment in the so called reactor building. Traditionally, these pools have been designed with a rectangular or square cross-section. The handling of the fuel, the internal parts and other equipment is performed by means of a fuel handling apparatus and overhead cranes which may be manoeuvred in a rectangular coordinate system and move the fuel, the internal parts and the other equipment between different pools and between the pools and the reactor vessel.

It is known to design the reactor containment with a circular cylindrical cross-section seen in a horizontal section. Such a shape is advantageous from a strength point of view and permits to subject the reactor containment to an overpressure in case of pipe breakage accidents or severe accidents and also for sub-pressures, which may arise in certain accident situations.

The combination of the rectangular or square upper space for said pools and the circular cylindrical reactor containment located thereunder, is a technical and time-consuming difficulty during design and construction of nuclear power devices of the type defined above. The transition from a circular cylindrical section to a square section involves an interruption of the construction work and new equipment must be supplied before the construction of the walls of the upper space. From a design point of view, it is furthermore difficult to manage the strength requirements without increasing, to greater expenses, the dimensions of the wall members defining the upper space and the pools enclosed therein.

JP-A-5 107 381 discloses a reactor containment consisting of six modules, defining a lower space having a reactor, and of three modules, which seem to define an upper space. The lower space has a square cross-section shape whereas the upper space has a rectangular cross-section shape.

### SUMMARY OF THE INVENTION

The object of the present invention is to simplify the construction of a nuclear reactor device of the type defined above and thereby reduce the construction time thereof.

This object is obtained by the nuclear reactor device initially defined and characterized in that the first wall member and second wall member have, seen in a horizontal section, an essentially identical cross-section shape and form an essentially common cylinder. By such a design of the wall members for the reactor containment and the upper space located thereabove, these wall members may be manufactured at one go immediately after each other. It means that the same equipment and the same form may be utilized for both wall members. Consequently, it is possible to reduce the construction time necessary and in such a manner reduce the construction expenses. In accordance with the invention, said essentially common cylinder may have an arbitrary cross-sectional shape; for instance it may be circular, elliptic, oval, square, rectangular.

According to an embodiment of the invention, said cross-sectional shape is essentially circular cylindrical. Such a shape has a high strength and may therefore carry large loads and stand large pressure changes. It means that the design and the construction of the wall member surrounding the upper space may be simplified in comparison with previously known technique according to which the upper space was surrounded by a rectangular wall member.

According to a further embodiment of the invention, the first wall member and the second wall member are cast in a continuous piece by means of sliding form casting. Such a sliding form casting is known per se and enables a very short time of construction. Since the both wall members have essentially the same cross-sectional shape, one and the same sliding form may be utilized for the complete casting operation. Advantageously, the first wall member and the second wall member are cast in concrete with reinforcement members provided in the concrete, which comprise tightening members arranged to enable a prestressing of said wall member. Said tightening members may extend in the second wall member, at least in one of the directions about the upper space and along the upper space.

According to a further embodiment of the invention, at least the second wall member comprises a wall coating provided onto the inner side thereof. Such a wall coating, which advantageously may be made of stainless steel, may function as a protection for the concrete against water present in the upper space. The wall coating may advantageously together with the reinforcement members be mounted together in advance to module blocks which are lifted to a position when the sliding form casting has reached a suitable level and thus before the casting proper of the upper wall member is performed. Thereby, the wall coating may function as a limiting wall of the form, i.e. it is sufficient that the outer form wall is sliding.

According to a further embodiment of the invention, the upper space is divided in part spaces by means of at least one primary wall element extending between two separated attachment portions of the second wall member. Such part spaces may form water-filled pools for fuel, internal parts from the reactor vessel and other equipment. Advantageously, there are two primary wall elements which are separated from each other and which each extends between two separated attachment portions of the second wall member, and furthermore two secondary wall elements, which extend between the two primary wall elements and which between themselves and together with the primary wall elements form an isolated part space, which may be located above a cover device of a separating wall separating the upper space from the inner space. Moreover, such primary wall elements function as load-absorbing elements in case of an overpressure in the reactor containment.

According to a further embodiment of the invention, door members are arranged to provide a passage between at least two of said part spaces. This embodiment enables a simple transport of fuel and internal parts from the reactor vessel through the isolated space and into further part spaces located outside the isolated space. By such short transport ways, the time consumption during fuel replacement and revision may be maintained at a low level.

The object stated above is also obtained by the method initially defined and characterized in that the first wall member and the second wall member are cast by means of an essentially common form being lifted upwardly during the course of the casting process, wherein the first wall member and the second wall member have, seen in a horizontal section, an essentially identical cross-sectional shape and form an essentially common cylinder. By such a casting technique, it is thus possible to cast both the wall members at one go in a significantly shorter period of time than according to the art previously known. Advantageously, said form comprises a sliding form.

According to an embodiment of the inventive method, the casting of the second wall member is preceded by the lifting to a position of prepared blocks comprising reinforcement members and an inner wall coating. Such blocks may advantageously be manufactured at the same time as the casting of the first wall member is performed and in such a manner the total time consumption may be kept on a low level.

According to a further embodiment of the inventive method, tightening members are provided during the course of the casting process in said wall member in such a manner that they extend in at least one of the directions about said spaces and along said spaces, and after the casting process the tightening members are tightened in order to prestress said wall member. Thereby, the tightening members may be provided in tubes provided in said wall member. After or in connection with said tightening, concrete may be injected into said tubes.

### BRIEF DESCRIPTION OF THE DRAWINGS

The present invention is now to be explained more closely by means of different embodiments, which are disclosed merely by way of example, and with reference to the drawings attached.
- Fig 1: discloses a view from above of a nuclear reactor device according to an embodiment of the invention.
- Fig 2: discloses a section through the nuclear reactor device along a line II-II in Fig 1.

### DETAILED DESCRIPTION OF DIFFERENT EMBODIMENTS

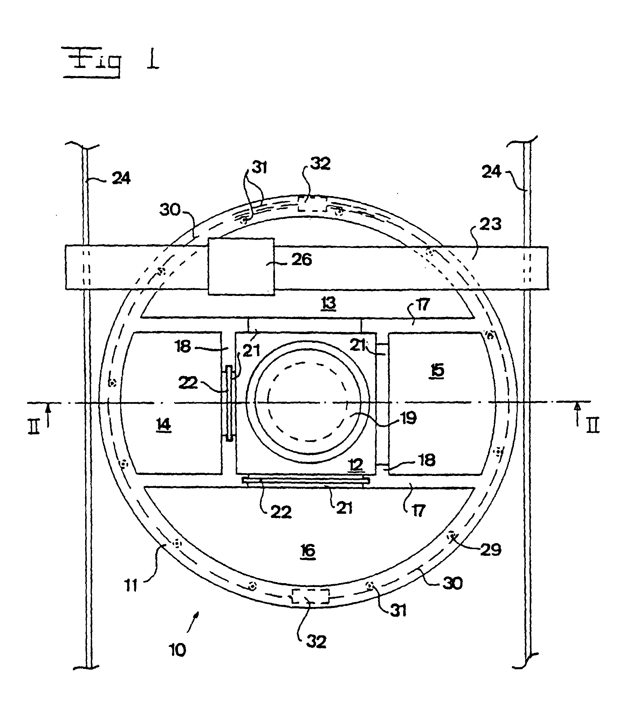

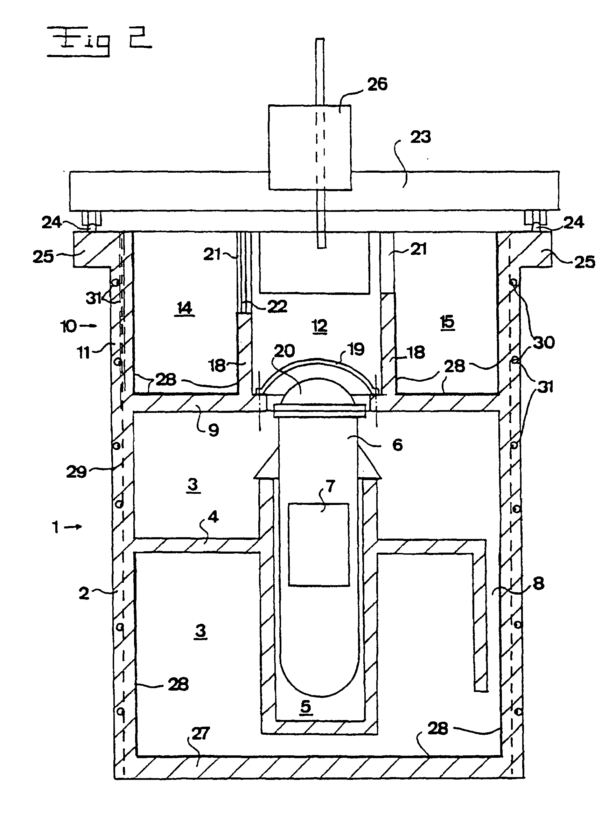

Figs 1 and 2 disclose schematically a nuclear reactor device according to the present invention. The device comprises a reactor containment 1 formed by a first essentially circular cylindrical wall member 2 enclosing and defining an inner space 3. The inner space 3 comprises an upper primary space and a lower secondary space, which are separated from each other by means of an essentially horizontal intermediate wall 4, which in its central part forms a cavity 5 extending downwardly from the primary space and housing a reactor vessel 6 in which a reactor core 7 is provided. Through the primary space of the inner space 3, a steam conduit, not disclosed, extends out of the reactor containment to a steam turbine plant. From the turbine plant, a feed water conduit, not disclosed, extends back through the reactor containment 1 and the primary space to the reactor vessel 6. The primary space of the inner space 3 is connected to the secondary space via a number of vertical channels 8. The secondary space of the inner space 3 comprises a so-called condensation pool comprising water for cooling and for the condensation of steam from the primary space.

The reactor containment 1 is delimited upwardly by an essentially horizontal separating wall 9 forming a bottom in an upper space 10 provided above the reactor containment 1. The upper space 10 is delimited and defined by a second essentially circular cylindrical wall member 11 forming a continuing part of the first wall member 2. This means that the first wall member and the second wall member have an essentially identical cross-sectional shape seen in a horizontal section and are essentially concentric to each other.

As appears from Fig 1, the upper space 10 is divided into five part spaces 12, 13, 14, 15, 16. This division is made by means of two primary wall elements 17 being essentially parallel to each other and extending between two respective separated attachment portions of the inner surface of the second wall member 11. Between these two wall elements 17, two secondary wall elements 18 being essentially parallel to each other extend. Between the two secondary wall elements 18 and the two primary wall elements 17, the part space 12, forming a central part space isolated from the other part space 13-16, is enclosed. The central part space 12 is located above a dome-shaped cover member 19 which may be removed and thereby uncover the reactor vessel 6 which in turn comprises, at its upper end, a dome-shaped cover member 20 which may be removed in order to uncover the interior of the reactor vessel 6. The central part space 12 is connected to each of the other part spaces 13-16 via a respective passage 21, which may comprise an openable door member 22.

Furthermore, the nuclear reactor device comprises a traverse device 23 which is movable on two rails 24 carried by a schematically indicated base 25 attached to the wall element 11. The traverse device 23 comprises a schematically disclosed fuel replacement apparatus and a lifting device 26, which is movable along the traverse device 23. The cover members 19 and 20 are lifted by means of a larger, not disclosed reactor building traverse device and are positioned in the reactor building outside the upper space 10. Thereafter, internal parts, such as for instance steam separators, may be lifted out of the reactor vessel 6 and positioned in for instance the part space 13. By means of the fuel replacement apparatus and the lifting device 26, the fuel rods may thereafter be lifted out of the reactor 6 and positioned in for instance the part space 14. Thereby, the door member 22, separating the part space 14 from the central part space 12, has been removed by means of the fuel replacement apparatus and the lifting device 26. It is to be noted that the part spaces 12-16 form water-filled pools, enabling the performance of said handling of the fuel and internal parts in such a manner that these always are located under water. The passage 21 in the fuel pool, in the example disclosed the part space 14, has such a depth that the fuel always is located in a radiation-protecting manner under the water surface during the passage to and from the part space 14. Furthermore, the part space 14 has such a depth that an upper edge of the fuel which has been placed in the part space 14 always is located below the lower edge of the passage 21. As a part of the pools 13, 15 and 16, a separate emergency cooling pool may be housed, which is utilized during cooling of the core in the reactor vessel and/or during cooling of the condensation pool.

The first wall member 2, the second wall member 11, the intermediate wall 4 and the separating wall 9 as well as a bottom wall 27 of the reactor containment 1 are all manufactured in concrete. The inner surfaces, forming pools and thus being subjected to water, are provided with a wall coating 28 which is indicated in Fig 2 by means of somewhat thicker lines and which may be manufactured in any corrosion-resistant material as for instance stainless steel.

The first wall member 2 and the second wall member 11 may in accordance with the present invention be manufactured by so called sliding form casting. It means that a form having an inner limiting wall and an outer limiting wall slowly is moved upwardly from the bottom wall 27 of the reactor containment 1 during a continuous supply of concrete. The lifting speed is so slow that the concrete provided inside the form has time to solidify during the time period of the movement of the sliding form from the position where the concrete was supplied. In such a manner, the first wall member 2 and the second wall member 11 may both be cast at one go in one single continuous casting process. In the wall members 2, 11, relatively large quantities of reinforcement bars, which are not disclosed in Figs 1 and 2, are contained. The vertical wall coating 28 of the second wall member 11 and the reinforcement intended for the second wall member 11 may advantageously be produced in advance in blocks, which are lifted to a position prior to the performance of the casting proper. Furthermore, tightening members 29 and 30 are provided in the wall members 2, 11 in such a manner that they extend essentially vertically along and about the upper space 10 and the inner space 3. The tightening members 29 and 30 are provided in tubes 31, which are cast within the concrete. For each round, two tubes 31 are provided, which extend over a respective semiround or a pipe extending around the complete round. Likewise, for each round tightening members 30 are provided, one in each tube 31. The tightening members 30 are tightened by means of schematically disclosed tightening devices 32 provided diametrically opposite to each other. The tightening takes place after the solidification of the concrete and involves a prestressing of the wall elements 2, 11 in such a manner that they may resist larger forces. Tightening devices (not disclosed) similar to the tightening devices 32 are provided for the vertical tightening members 29. It is also possible to let the tubes 31 form parts of said blocks.

In order to further simplify the casting process, one may let the wall coatings 28 form the inner limiting wall of the casting form, which means that merely one sliding outer limiting wall needs to be provided, at least for the part of the wall members 2, 11 which are provided with wall coatings 28.

The disclosed embodiment of the primary wall elements 17, as horizontal beams, leads to an improved strength of the second wall member 11. They will also contribute to the support of the forces from the separating wall 9 at an overpressure in the reactor containment 1 and in such a manner increase the strength of the reactor containment 1.

The invention is not limited to the embodiments disclosed herein but may be varied and modified within the scope of the following claims. For instance, it is to be noted that the wall elements 17 and 18 may have another extension than the one disclosed. It is for instance possible to provide a circular cylindrical wall element surrounding the dome-shaped cover member 19 and to provide radially extending wall elements between the wall member 11 and such an inner circular cylindrical wall element. The rails of the traverse device may be provided in another manner, for instance they may lie on the upper edge side of the primary wall elements 17 or be provided as a rail located on the upper edge side of the other wall element 11, the movement of the fuel replacement apparatus and the lifting device 26 being performed by means of polar co-ordinates.

## Claims

1. A nuclear reactor device comprising:
- a reactor containment (1), formed by a first wall member (2) defining an inner space (3),
- a reactor vessel (6), housing a reactor core (7) and being provided in the inner space (3), and
- an upper space (10) provided above the reactor containment (1) and defined by a second wall member (11),
**characterized in that** the first wall member (2) and the second wall member (11) have, seen in a horizontal section, an essentially identical cross-sectional shape and form an essentially common cylinder.

2. A nuclear reactor device according to claim 1, **characterized in that** said cross-sectional shape is essentially circular.

3. A nuclear reactor device according to claim 2, **characterized in that** the first wall member (2) and the second wall member (11) are cast in a continuous piece by means of sliding form casting.

4. A nuclear reactor device according to claim 3, **characterized in that** the first wall member (2) and the second wall (11) are cast in concrete with reinforcement members (29, 30) provided in the concrete and comprising tightening members (30) arranged to enable a biasing of said wall members (2, 11).

5. A nuclear reactor device according to claim 4, **characterized in that** said tightening members (29) extend in the second wall member (11) at least in one of the directions about the upper space (10) and along the upper space (10).

6. A nuclear reactor device according to any one of the preceding claims, **characterized in that** at least the second wall member (11) comprises a wall coating (28) provided onto the inner side.

7. A nuclear reactor device according to any one of the preceding claims, **characterized in that** the upper space (10) is divided into part spaces (12 - 16) by means of at least one primary wall element (17) extending between two separated attachment portions of the second wall member (11).

8. A nuclear reactor device according to claim 7, **characterized by** two primary wall elements (17) separated from each other and each extending between two separated attachment portions of the second wall member (11).

9. A nuclear reactor device according to claim 8, **characterized in that** the two primary wall elements (17) are essentially parallel to each other.

10. A nuclear reactor device according to any one of claims 8 and 9, **characterized by** two secondary wall elements (18) which extend between the two primary wall elements (17) and which between themselves and together with the primary wall elements (17) form an isolated part space (12).

11. A nuclear reactor device according to claim 10, **characterized in that** the isolated part space (12) is located above a cover device (19) of a separating wall (9) separating the upper space (10) from the inner space (3).

12. A nuclear reactor device according to any one of the preceding claims, **characterized by** door members (22) arranged to provide a passage (21) between at least two of said part spaces (12 - 16).

13. A method of constructing a nuclear reactor device, comprising the steps of:
- casting a first wall member defining an inner space of a reactor containment intended to comprise a reactor vessel to be arranged in the inner space and housing a reactor core, and
- providing a second wall member defining an upper space above the reactor containment, **characterized in that** the first wall member and the second wall member are cast by means of an essentially common form being lifted upwardly during the course of the casting process.

14. A method according to claim 13, **characterized in that** the said form comprises a sliding form.

15. A method according to any one of claims 13 and 14, **characterized in that** the casting of the second wall member is preceded by the lifting to a position of prepared blocks comprising reinforcement members and an inner wall coating.

16. A method according to claim 15, **characterized in that** the during the course of the casting process tightening members are provided in said wall member in such a manner that they extend in at least one of the directions about said spaces and along said spaces, and that the tightening members after the casting process are tightened to prestress said wall member.

17. A method according to claim 16, **characterized in that** the tightening members are provided in tubes provided in said wall member.

18. A method according to claim 17, **characterized in that** after or in connection with said tightening concrete is injected into said tubes.

## Patentansprüche

1. Kernreaktoranlage mit
- einer Reaktor-Sicherheitshülle (1), die von einem ersten Wandglied (2) gebildet wird, welches einen inneren Raum (3) definiert,
- einem Reaktorgefäß (6), welches einen Reaktorkern (7) aufnimmt und in dem inneren Raum (3) angeordnet ist, und
- einem oberen Raum (10), der über der Reaktor-Sicherheitshülle (1) angeordnet ist und von einem zweiten Wandglied (11) definiert wird,
**dadurch gekennzeichnet, daß** das erste Wandglied (2) und das zweite Wandglied (11), gesehen in einem horizontalen Schnitt, eine im wesentlichen identische Querschnittsform haben und einen im wesentlichen gemeinsamen Zylinder bilden.

2. Kernreaktoranlage nach Anspruch 1, **dadurch gekennzeichnet, daß** die genannte Querschnittsform im wesentlichen kreisförmig ist.

3. Kernreaktoranlage nach Anspruch 2, **dadurch gekennzeichnet, daß** das erste Wandglied (2) und das zweite Wandglied (11) mittels Gleitschalungs-Gießen in einem zusammenhängenden Stück gegossen sind.

4. Kernreaktoranlage nach Anspruch 3, **dadurch gekennzeichnet, daß** das erste Wandglied (2) und das zweite Wandglied (11) aus Beton gegossen sind mit Armierungsgliedern (29,30), die im Beton vorgesehen sind und Spannglieder (30) enthalten, mit denen eine Vorspannung in den genannten Wandgliedern (2,11) erzeugt werden kann.

5. Kernreaktoranlage nach Anspruch 4, **dadurch gekennzeichnet, daß** die genannten Spannglieder (29) sich in mindestens einer der Richtungen um den oberen Raum (10) und entlang des oberen Raumes (10) in das zweite Wandglied (11) hinein erstrecken.

6. Kernreaktoranlage nach einem der vorhergehenden Ansprüche, **dadurch gekennzeichnet, daß** mindestens das zweite Wandglied (11) einen an der inneren Seite angebrachten Wandbelag (28) enthält.

7. Kernreaktoranlage nach einem der vorhergehenden Ansprüche, **dadurch gekennzeichnet, daß** der obere Raum (10) durch mindestens ein primäres Wandelement (17), welches sich zwischen zwei separaten Befestigungsteilen des zweiten Wandgliedes (11) erstreckt, in Teilräume (12-16) unterteilt ist.

8. Kernreaktoranlage nach Anspruch 7, **dadurch gekennzeichnet, daß** zwei voneinander getrennte primäre wandelemente (17) vorhanden sind und jedes sich zwischen zwei separaten Befestigungsteilen des zweiten Wandgliedes (11) erstreckt.

9. Kernreaktoranlage nach Anspruch 8, **dadurch gekennzeichnet, daß** die beiden primären Wandelemente (17) im wesentlichen parallel zueinander verlaufen.

10. Kernreaktoranlage nach einem der Ansprüche 8 und 9, **dadurch gekennzeichnet, daß** zwei sekundäre Wandelemente (18) vorhanden sind, die sich zwischen den beiden primären Wandelementen (17) erstrecken und die zwischen sich und zusammen mit den primären Wandelementen (17) einen isolierten Teilraum (12) bilden.

11. Kernreaktoranlage nach Anspruch 10, **dadurch gekennzeichnet, daß** der isolierte Teilraum (12) über einer Deckelvorrichtung (19) einer Trennwand (9) angeordnet ist, welche den oberen Raum (10) von dem inneren Raum (3) trennt.

12. Kernreaktoranlage nach einem der vorhergehenden Ansprüche, **dadurch gekennzeichnet, daß** Türglieder (22) vorhanden sind, die einen Durchgang (21) zwischen mindestens zwei der genannten Teilräume (12-16) ermöglichen.

13. Verfahren zur Errichtung einer Kernreaktoranlage, zu welchem folgende Schritte gehören:
- Gießen eines ersten Wandgliedes, welches einen inneren Raum einer Reaktor-Sicherheitshülle definiert, der zur Aufnahme eines Reaktorgefäßes bestimmt ist, welches in dem inneren Raum angeordnet wird und einen Reaktorkern aufnimmt, und
- Herstellung eines zweiten Wandgliedes, welches einen oberen Raum über der Reaktor-Sicherheitshülle definiert,
**dadurch gekennzeichnet, daß** das erste Wandglied und das zweite Wandglied mittels einer im wesentlichen gemeinsamen Form gegossen werden, die im verlaufe des Gießvorganges nach oben bewegt wird.

14. Verfahren nach Anspruch 13, **dadurch gekennzeichnet, daß** zu der genannten Form eine Gleitschalung gehört.

15. Verfahren nach einem der Ansprüche 13 und 14, **dadurch gekennzeichnet, daß** dem Gießen des zweiten Wandgliedes das Heben von vorbereiteten Blöcken in eine Position vorausgeht, wobei die Blöcke Armierungsglieder und einen inneren Wandbelag enthalten.

16. Verfahren nach Anspruch 15, **dadurch gekennzeichnet, daß** im Verlaufe des Gießvorganges in dem genannten Wandglied Spannglieder in solcher Weise angeordnet werden, daß sie sich mindestens in eine der Richtungen um die genannten Räume und entlang den genannten Räumen erstrecken und daß die Spannglieder nach dem Gießvorgang angezogen werden, um das genannte Wandglied vorzuspannen.

17. Verfahren nach Anspruch 16, **dadurch gekennzeichnet, daß** die Spannglieder in Rohren untergebracht werden, die in dem genannten Wandglied angeordnet werden.

18. Verfahren nach Anspruch 17, **dadurch gekennzeichnet, daß** nach oder im Zusammenhang mit der genannten Anziehen (Spannen) Beton in die genannten Rohre injeziert wird.

## Revendications

1. Dispositif de réacteur nucléaire comprenant :
un confinement (1) de réacteur formé par un premier élément (2) de paroi définissant un espace (3) intérieur,
une enceinte (6) de réacteur dans lequel est logé un coeur (7) de réacteur et qui est prévu dans l'espace (3) intérieur,
un espace (10) supérieur prévu au dessus du confinement (1) de réacteur et défini par un deuxième élément (11) de paroi,
**caractérisé en ce que** le premier élément (2) de paroi et le deuxième élément (11) de paroi ont, vu en section horizontale, une forme de section transversale sensiblement identique et forment un cylindre sensiblement commun.

2. Dispositif de réacteur nucléaire suivant la revendication 1, **caractérisé en ce que** la forme de section transversale est sensiblement circulaire.

3. Dispositif de réacteur nucléaire suivant la revendication 2, **caractérisé en ce que** le premier (2) élément de paroi et le deuxième élément (11) de paroi, sont coulés en une pièce continue au moyen d'une coulée à moule glissant.

4. Dispositif de réacteur nucléaire suivant la revendication 3, **caractérisé en ce que** le premier élément (2) de paroi et le deuxième élément (11) de paroi sont coulés en béton avec des éléments (29, 30) de renfort, prévus dans le béton et comprenant des éléments (30) de serrage disposés de manière à permettre d'incliner les éléments (2, 11) de paroi.

5. Dispositif de réacteur nucléaire suivant la revendication 4, **caractérisé en ce que** les éléments (29) de serrage s'étendent dans le deuxième élément (11) de paroi au moins dans l'une des directions autour de l'espace (10) supérieur et le long de l'espace (10) supérieur.

6. Dispositif de réacteur nucléaire suivant l'une quelconque des revendications précédentes, **caractérisé en ce qu'**au moins le deuxième (11) élément de paroi comprend un revêtement (28) de paroi prévu sur la face intérieure.

7. Dispositif de réacteur nucléaire suivant l'une quelconque des revendications précédentes, **caractérisé en ce que** l'espace (10) supérieur est subdivisé en des sous espaces (12 à 16) au moyen d'au moins un élément (17) primaire de paroi s'étendant entre deux parties de fixation distinctes du deuxième élément (11) de paroi.

8. Dispositif de réacteur nucléaire suivant la revendication 7, **caractérisé par** deux éléments (17) primaires de paroi séparés l'un de l'autre et s'étendant chacun entre deux parties distinctes de fixation du deuxième élément (11) de paroi.

9. Dispositif de réacteur nucléaire suivant la revendication 8, **caractérisé en ce que** les deux éléments (17) primaires de paroi sont sensiblement parallèles l'un à l'autre.

10. Dispositif de réacteur nucléaire suivant l'une quelconque des revendications 8 et 9, **caractérisé par** deux éléments (18) secondaires de paroi qui s'étendent entre les deux éléments (17) primaires de paroi et qui forment entre eux et ensemble avec les éléments (17) primaires de paroi un sous-espace (12) isolé.

11. dispositif de réacteur nucléaire suivant la revendication 10, **caractérisé en ce que** le sous-espace (12) isolé est disposé au dessus d'un dispositif (19) de couvercle sur une paroi (9) de séparation séparant l'espace (10) supérieur de l'espace (3) intérieur.

12. Dispositif de réacteur nucléaire suivant l'une quelconque des revendications précédentes, **caractérisé par** des éléments (22) formant portes disposés de manière à ménager un passage (21) entre au moins deux des sous-espaces (12 à 16).

13. Procédé de construction d'un dispositif de réacteur nucléaire comprenant les stades qui consistent :
- à couler un premier élément de paroi définissant un espace intérieur d'un confinement de réacteur destiné à comprendre une enceinte de réacteur à placer dans l'espace intérieur et à loger un coeur de réacteur et
- à prévoir un deuxième élément de paroi définissant un espace supérieur au dessus du confinement du réacteur, **caractérisé en ce que** le premier élément de paroi et le deuxième élément de paroi sont coulés au moyen d'un moule sensiblement commun qui est soulevé au cours de l'opération de coulée.

14. Procédé suivant la revendication 13, **caractérisé en ce que** le moule comprend un moule glissant.

15. Procédé suivant l'une quelconque des revendications 13 et 14, **caractérisé en ce que** la coulée du deuxième élément de paroi est précédé du soulèvement jusqu'à une position de blocs préparés comprenant des éléments de renfort et un revêtement intérieur de paroi.

16. Procédé suivant la revendication 15, **caractérisé en ce qu'**au cours de l'opération de coulée, il est prévu des éléments de serrage dans l'élément de paroi de façon à ce qu'ils s'étendent dans au moins l'une des directions autour des espaces et le long des espaces et **en ce que** les éléments de serrage sont, après l'opération de coulée, serrés pour précontraindre l'élément de paroi.

17. Procédé suivant suivant la revendication16, **caractérisé en ce que** les éléments de serrage sont prévus dans des tubes prévus dans l'élément de paroi.

18. Procédé suivant la revendication 17, **caractérisé en ce que**, après ou en liaison avec le serrage, du béton est injecté dans les tubes.
